# EUROPÄISCHE PATENTSCHRIFT

(11) **EP 1 128 115 B1**
(45) Veröffentlichungstag und Bekanntmachung des Hinweises auf die Patenterteilung: **31.08.2005**
(21) Anmeldenummer: 01250031.0
(22) Anmeldetag: 30.01.2001
(51) Int. Cl.: F16L 13/16, F16L 13/14

(54) **Rohrpressverbindung**
Compression joint for pipes
Raccord à compression

(30) Priorität: 23.02.2000 DE 10009738
(43) Veröffentlichungstag der Anmeldung: 29.08.2001
(73) Patentinhaber: Geberit Mapress GmbH, 40764 Langenfeld (DE)
(72) Erfinder: Speckemeyer, Jens, Dipl.-Ing., 45475 Mülheim (DE)
(74) Vertreter: Meissner, Peter E.

(56) Entgegenhaltungen:
- DE-A- 2 725 280
- DE-U- 29 610 811
- US-A- 3 605 200
- US-A- 5 484 174

## Beschreibung

Die Erfindung betrifft eine Rohrpreßverbindung, bestehend aus einem Preßfittingelement aus Metall und einem darin eingeschobenen metallischen Leitungsrohr gemäß dem Oberbegriff des Patentanspruches 1.

Das Preßfitting-System für die Hausinstallation aus Kohlenstoffstahl oder hochlegiertem Stahl sowie Kupfer ist bekannt (siehe Prospekt mapress mannesmann pressfitting-system, Lieferprogramm Sanitär, Heizung, September 1998, sowie mapress Kupfer 03/1999 und DE-27 25 280 A1). Dieses System besteht im wesentlichen aus einem plastisch verformbaren metallischen Preßfittingelement, das je nach Ausbildung als Bogen- oder T-Stück oder Muffe oder Übergangsstück mindestens einen im Querschnitt wulstartig ausgebildeten, einen Dichtring aufnehmenden Bereich aufweist und daran sich ein in Längsrichtung erstreckender, zylindrisch ausgebildeter Bereich anschließt. Am Ende der Erstreckung dieses zylindrischen Bereiches ist eine radial nach innen sich erstreckende sickenförmige Vertiefung angepreßt, die als Anschlag für das einschiebbare, glattendige Rohr dient. Mittels eines mindestens zwei Preßbacken aufweisenden Preßwerkzeuges wird das wulstartige Ende plastisch und der eingeschlossene Dichtring elastisch verformt. Zusätzlich wird mit dem gleichen Preßvorgang im zylindrischen Bereich des Preßfittingelementes in unmittelbarer Nähe des wulstartigen Endes eine sickenförmige Vertiefung angepreßt, die auch das darunter liegende eingeschobene Rohr mit erfaßt. Der elastisch verformte Dichtring übernimmt bei diesem Verbindungssystem die Dichtfunktion, während die angepreßte sickenförmige Vertiefung die durch den Innendruck entstehenden Längskräfte sowie einen Teil der Momente aufnimmt. Der Dichtring wird aus einem gummielastischen Werkstoff, wie z. B. Butylkautschuk meist in Form eines Runddichtringes hergestellt.

Diese Rohrpreßverbindung mit einer Kombination aus einer plastischen Verformung der metallischen Elemente wie Preßfitting und Leitungsrohr und einer rein elastischen Verformung des eingelegten Dichtringes hat sich seit mehr als 20 Jahren in der Sanitär- und Heizungstechnik bewährt, da die Verpreßtechnik gegenüber Löten und Schweißen sowie Gewindeverbindungen hinsichtlich der Montagezeit und Vermeidung von Brandgefahr von Vorteil ist. Nachteilig bei dieser Anordnung aber ist, daß bedingt durch das für den Dichtring verwendete Material der Einsatzbereich des Systems hinsichtlich der Temperaturen und /oder bezüglich der zu transportierenden Medien begrenzt ist.

Ein anders gestaltetes Verbindungssystem aus zwei Rohren ist aus der US 4,850,621 bekannt. Bei diesem System weist das eine Rohr entweder einen nach innen oder nach außen sich erstreckenden Ringwulst auf, in den ein separater Dichtring anordenbar ist. Im Abstand dazu weist das gleiche Rohr einen Bereich auf, der mit in Umfangsrichtung gesehen einer Vielzahl von Schlitzen versehen ist. Mittels eines diesen Bereich umfassenden Bandes wird der geschlitzte Bereich in eine muldenartige Vertiefung des eingeschobenen anderen Rohres gepreßt. Als weitere Sicherung weist das eingeschobene Rohr einen weiteren Ringwulst auf, der als Anschlag für das aufgeschobene Rohr dient oder über den das aufgeschobene Rohr mit dem Schlitzbereich sich erstreckt. Nachteilig bei diesem System ist, daß der Einsatzbereich des Verbindungssystems durch das für den Dichtring verwendete Material begrenzt wird und die Herstellung eines einen geschlitzten Bereich aufweisenden Rohres aufwendig ist.

Aufgabe der Erfindung ist es, eine Rohrpreßverbindung anzugeben, die unter Beibehaltung der bewährten Verpreßtechnik universell einsetzbar ist und mit der insbesondere höhere Temperaturen und / oder der Transport aggressiver Medien beherrschbar ist. Eine weitergehende Aufgabe besteht darin, für die vorgeschlagene Rohrpreßverbindung die im Markt bereits vorhandenen Preßbacken ebenfalls verwenden zu können.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung weist unter Verzicht auf die Anordnung eines separaten Dichtmittels die Rohrpressverbindung einen formschlüssig clipsbaren offenen Ring auf, und das Preßfittingelement mindestens einen muldenartig ausgebildeten dünnwandigen Abschnitt auf, in dem der Ring einlegbar ist, dessen Innendurchmesser nach Bildung des Formschlusses etwas geringer ist als der Außendurchmesser des Bodenbereiches des muldenartig ausgebildeten Abschnittes. Durch diese Anordnung wird im Kontaktbereich zwischen Preßfittingelement und eingeschobenem Leitungsrohr eine metallische Abdichtung gebildet, unter Verzicht auf die Anordnung eines gummielastischen Dichtringes. Somit wird der Einsatzbereich der vorgeschlagenen Rohrpreßverbindung nur noch durch den für das Preßfittingelement und die Leitungsrohre verwendeten Werkstoff bestimmt. Um die im Markt sich befindenden Preßbacken auch für die vorgeschlagene Rohrpreßverbindung nutzen zu können, ist nach einem weiteren Merkmal der Erfindung die über den muldenartig ausgebildeten Abschnitt überstehende äußere Kontur des Ringes so ausgebildet, daß sie in etwa der Ausnehmung der üblichen Preßbacken entspricht.

Um die Anpreßkraft des Ringes auf eine kleine Fläche zu konzentrieren, weist der Bodenbereich des muldenartig ausgebildeten Abschnittes eine umlaufende Erhebung auf. Vorzugsweise ist diese Erhebung symmetrisch im Abschnitt angeordnet. Zur Bildung eines Formschlusses sind die Endbereiche des Ringes als hakenförmiger Verschluß ausgebildet. Zur Verbesserung des Ansetzens der Preßbacken der Preßzange weist nach einem weiteren Merkmal der Erfindung der Ring im Verschlußbereich je einen radial nach außen sich erstreckenden Anschlag auf.

In der Zeichnung wird die erfindungsgemäß ausgebildete Rohrpreßverbindung näher erläutert. Es zeigen:
- Figur 1: in einem Längsschnitt eine erste Ausführungsform einer erfindungsgemäß ausgebildeten Rohrpreßverbindung
- Figur 2: einen Schnitt in Richtung A-A in Figur 1
- Figur 3: im vergrößerten Maßstab das Detail X in Figur 1
- Figur 4: wie Figur 1, aber eine zweite Ausführungsform
- Figur 5: einen Schnitt in Richtung B-B in Figur 4
- Figur 6: im vergrößerten Maßstab das Detail Y in Figur 4
- Figur 7: den Endbereich des Ringes in geöffneter Stellung
- Figur 8: wie Figur 7, aber in geschlossener Stellung
- Figur 9: wie Figur 7, aber eine zweite Ausführungsform
- Figur 10: wie Figur 8, aber eine zweite Ausführungsform

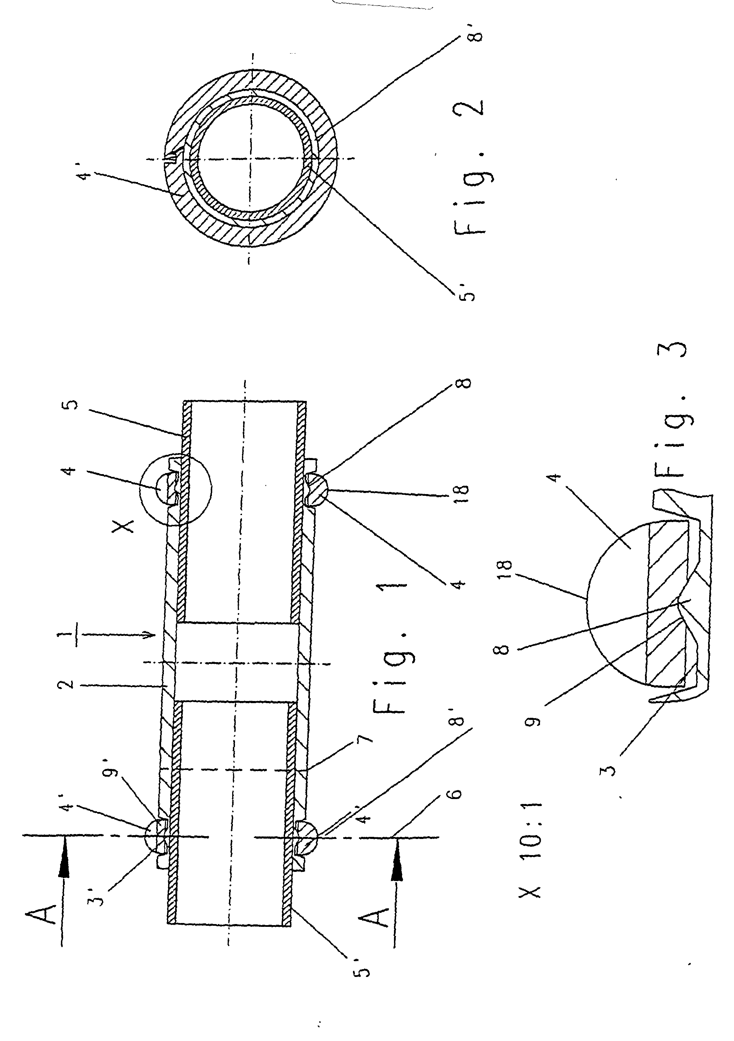

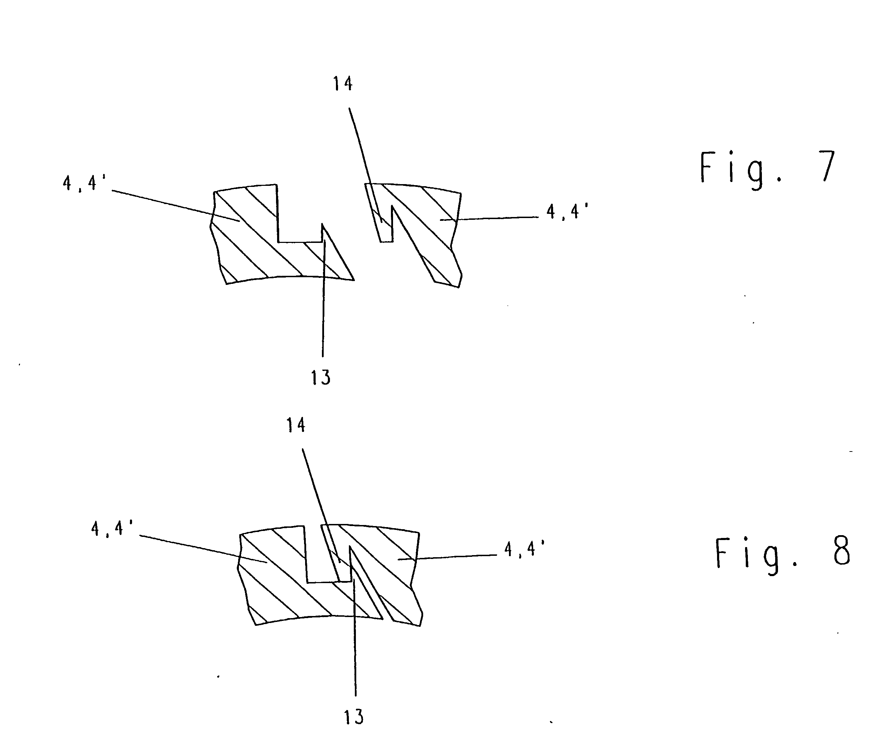

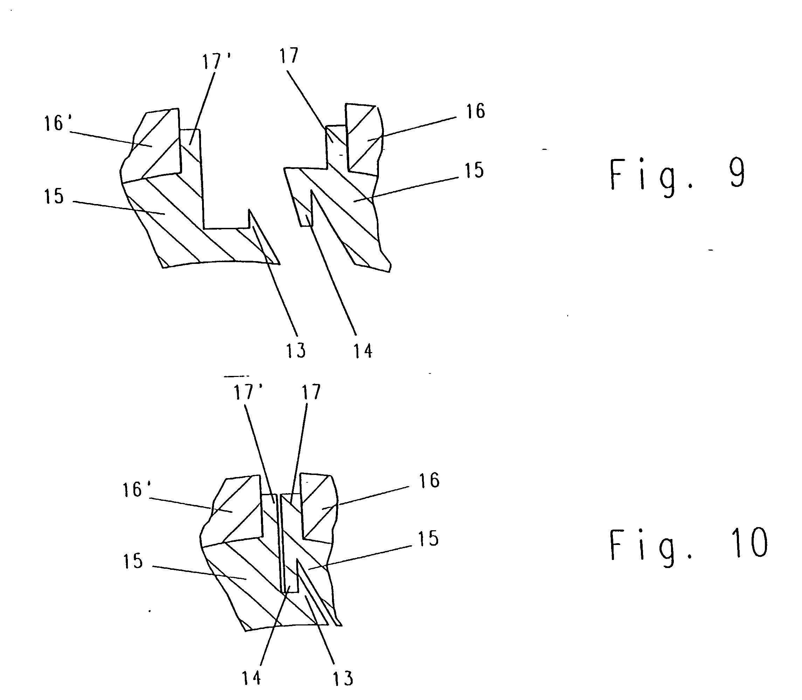

In Figur 1 ist in einem Längsschnitt eine erste Ausführungsform der erfindungsgemäß ausgebildeten Rohrpreßverbindung 1 dargestellt. Sie besteht aus einem Preßfittingelement 2 in Form einer zylindrischen Hülse, das in beiden Endbereichen je einen muldenförmig ausgebildeten, dünnwandigen Abschnitt 3, 3' aufweist. In diesem Abschnitt 3, 3' ist ein formschlüssig clipsbarer Ring 4, 4' einlegbar. Die Ausbildung des Endbereiches des Ringes 4, 4' ist in den Figuren 7-10 erläutert. Zur Bildung einer Rohrpreßverbindung 1 ist in das Preßfittingelement 2 der glattendige Endbereich je eines Leitungsrohres 5, 5' eingeschoben. Mittels Preßbacken 16,16' (Fig. 10) einer hier nicht dargestellten Preßzange wird nach Schließen des Ringes 4, 4' im Kontaktbereich zwischen dem muldenförmig ausgebildeten Abschnitt 3, 3' und dem jeweiligen Leitungsrohr 5,5' eine metallische Abdichtung gebildet. Diese wird auch als Dichtheitsebene 6 bezeichnet. Mit den gleichen Preßbacken 16,16' der Preßzange wird im zylindrischen Bereich des Preßfittingelementes 2 durch plastische Verformung eine die axiale Sicherung darstellende Festigkeitsebene 7 erzeugt. Um die im Markt sich befindenden Preßbacken auch für diese Rohrpreßverbindung 1 nutzen zu können, entspricht die über den muldenartig ausgebildeten Abschnitt 3,3' überstehende äußere Kontur 18 des jeweiligen Ringes 4,4' etwa der Ausnehmung 19 der bereits vorhandenen Preßbacken.

Um die Preßkraft des Ringes 4, 4' auf eine möglichst kleine Fläche zu konzentrieren, weist der Bodenbereich des muldenartig ausgebildeten Abschnittes 3, 3' eine umlaufende Erhebung 8,8' auf. Zur Anpassung an diese Erhebung 8,8' weist der jeweilige Ring 4,4' auf der Innenseite eine entsprechende Ausnehmung 9,9' auf. Um die erforderliche Preßkraft zu erzeugen, ist der Innendurchmesser des Ringes 4,4' nach der Bildung des Formschlusses etwas geringer als der Außendurchmesser der Erhebung 8,8' des dünnwandigen Abschnittes 3,3'.

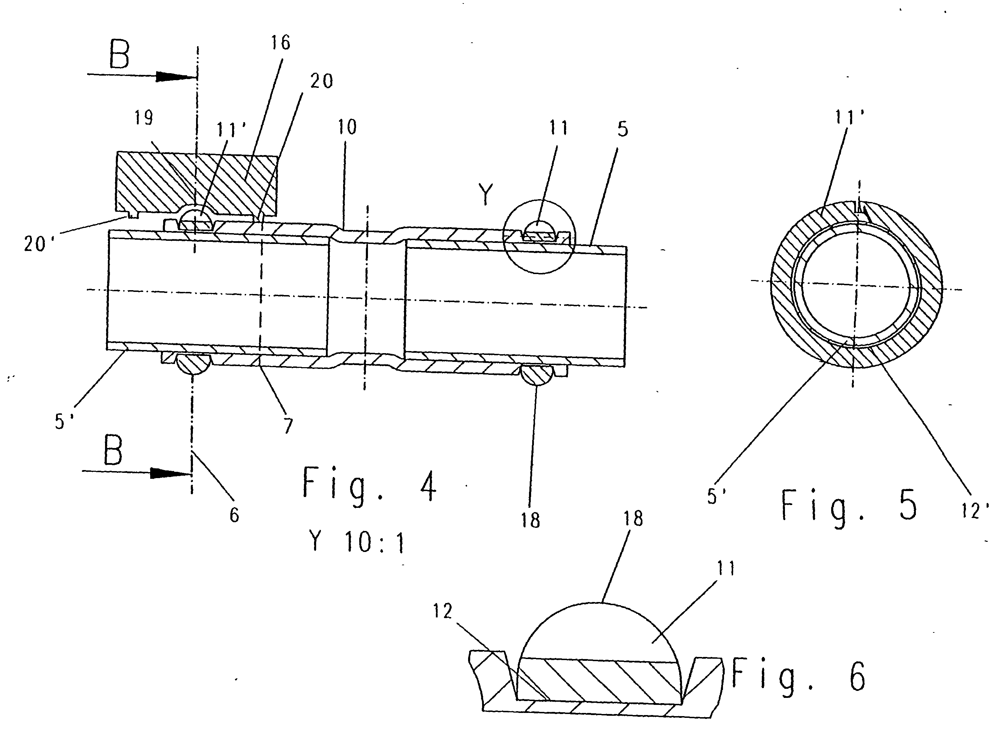

Figur 4 zeigt in einem gleichen Längsschnitt wie Figur 1 eine zweite Ausführungsform, wobei für gleiche Teile gleiche Bezugszeichen gewählt worden sind. Unterschiedlich ist nur, daß das Preßfittingelement 10 in beiden Endbereichen mit je einem dünnwandigen muldenförmig ausgebildeten Abschnitt 12,12' versehen ist, dessen Bodenbereich eben ist. Der formschlüssig verschließbare Ring 11, 11' ist an seiner Unterseite passend dazu ebenfalls eben ausgebildet.

In den Figuren 7 und 8 ist in einer vergrößerten Darstellung der jeweilige Endbereich des formschlüssig clipsbaren Ringes 4, 4' dargestellt. Beide Endbereiche weisen je einen Haken 13,14 auf, die in der in Figur 8 dargestellten Schließstellung einen Formschluß ergeben. Dies wird dadurch erreicht, daß die äußere radiale Erstreckung des jeweiligen Hakens 13,14 auf einem anderen Durchmesser liegt.

Figur 9 und 10 zeigen eine andere Art der Ausführung des Ringes 15. Damit die Preßbacken 16, 16' der hier nicht dargestellten Preßzange leichter ansetzen können, weist der jeweilige Endbereich des Ringes 15 einen radial nach außen sich erstreckenden Steg 17,17' auf.

## Patentansprüche

1. Rohrpreßverbindung, bestehend aus einem Preßfittingelement aus Metall, das mindestens einen dichtenden Bereich und einen daran anschließenden, der Einschubseite abgewandten, zylindrisch ausgebildeten Bereich aufweist und einem dünnwandigen metallischen Leitungsrohr, dessen glattendiger Endbereich in das Preßfittingelement eingeschoben und mittels eines das Preßfittingelement umfassenden, mindestens zwei Preßbacken aufweisenden Preßwerkzeuges nach dem Ansetzen und Schließen eine unlösbare, dichte Rohrpreßverbindung gebildet wird, wobei während des Verpressens die Preßbacken sowohl auf den dichtenden Bereich, als auch auf den der Einschubseite abgewandten zylindrisch ausgebildeten Abschnitt des Preßfittingelementes einwirken,
**dadurch gekennzeichnet, dass** die Rohrpressverbindung einen formschlüssig clipsbaren offenen Ring aufweist,
und dass das Preßfittingelement (2,10) mindestens einen dünnwandigen, muldenartig ausgebildeten Abschnitt (3,3',12,12') aufweist, in dem der Ring (4,4',11,11') einlegbar ist, dessen Innendurchmesser nach der Bildung des Formschlusses etwas geringer ist als der Außendurchmesser des Bodenbereiches des muldenartigen Abschnittes (3,3',12,2'), wobei der muldenartige Bereich mit dem darunter liegenden Mantelbereich des Leitungsrohres (5,5') nach dem Einlegen eine metallische Abdichtung bildet.

2. Rohrpreßverbindung nach Anspruch 1,
**dadurch gekennzeichnet,**
**dass** die über den muldenartig ausgebildeten Abschnitt (3,3',12,12') überstehende äußere Kontur (18) des Ringes (4,4',11,11') etwa der Ausnehmung (19) üblicher Preßbacken (16,16') entspricht.

3. Rohrpreßverbindung nach Anspruch 1 und 2,
**dadurch gekennzeichnet,**
**dass** der Bodenbereich des muldenartig ausgebildeten Abschnittes (3,3)'eine umlaufende Erhebung (8) aufweist.

4. Rohrpreßverbindung nach Anspruch 3,
**dadurch gekennzeichnet,**
**dass** die Erhebung (8) symmetrisch im Abschnitt (3,3') angeordnet ist.

5. Rohrpreßverbindung nach einem der Ansprüche 1 bis 4,
**dadurch gekennzeichnet,**
**dass** die Endbereiche des einlegbaren Ringes (3,3',11,11') als hakenförmiger (13,14) Verschluß ausgebildet sind.

6. Rohrpreßverbindung nach einem der Ansprüche 1 bis 5,
**dadurch gekennzeichnet,**
**dass** der Ring (15) im Verschlußbereich mit je einem radial nach außen sich erstreckenden Anschlag (17,17') versehen ist.

## Claims

1. Compression joint for pipes, consisting of a press fitting element made of metal which has at least one sealing area and a cylindrical area adjoining same and facing towards the insertion side, and of a thin-walled metallic conduit pipe, the smooth-ended end area of which is inserted into the press fitting element, and, by means of a compression tool which encircles the press fitting element and has at least two pressure clamps, a nonremovable sealed compression joint is formed after said tool is placed on and closed, whereby during the compression process the pressure clamps act both on the sealing area and on the cylindrical section of the press fitting element that faces towards the insertion side,
**characterised in that**
the compression joint has a positive-fit clip-on open ring, and that the press fitting element (2, 10) has at least one thin-walled, trough-like section (3, 3', 12, 12') in which the ring (4, 4', 11, 11') can be placed, the internal diameter of which, after the positive closure has been formed, is somewhat smaller than the external diameter of the base area of the trough-like section (3, 3', 12, 12'), the trough-like area forming, after the placing-in process, a metallic seal with the casing area of the conduit pipe (5, 5') underneath it.

2. Compression joint for pipes as in claim 1,
**characterised in that**
the external contour (18) of the ring (4, 4', 11, 11') that projects beyond the trough-like section (3, 3', 12, 12') corresponds approximately to the recess (19) of standard pressure clamps (16, 16').

3. Compression joint for pipes as in claim 1 and 2,
**characterised in that**
the base area of the trough-like section (3, 3') has a raised area (8) running round it.

4. Compression joint for pipes as in claim 3,
**characterised in that**
the raised area (8) is positioned symmetrically inside the section (3, 3').

5. Compression joint for pipes as in one of claims 1 to 4,
**characterised in that**
the end areas of the insertable ring (3, 3', 11, 11') are made in the form of a hook-shaped (13, 14) closure.

6. Compression joint for pipes as in one of claims 1 to 5,
**characterised in that**
the ring (15) has, in each closure area, a limit stop (17, 17') which extends radially outwards.

## Revendications

1. Assemblage de tubes par sertissage, comprenant un élément de raccord à sertir en métal, qui présente au moins une zone d'étanchéité et une zone cylindrique orientée à l'opposé du côté d'insertion faisant suite à la précédente, et un tube de conduite métallique à paroi mince, dont la zone d'extrémité à bout lisse est introduite dans l'élément de raccord à sertir et forme un assemblage de tubes par sertissage indémontable et étanche au moyen d'un outil de compression présentant au moins deux mâchoires de compression et entourant l'élément de raccord à sertir, après mise en place et fermeture, les mâchoires de compression agissant pendant le sertissage aussi bien sur la zone d'étanchéité qu'également sur le segment de l'élément de raccord à sertir réalisé cylindrique et orienté à l'opposé du côté d'insertion,
**caractérisé en ce que** l'assemblage de tubes par sertissage présente une bague ouverte clipsable par correspondance de forme et **en ce que** l'élément de raccord à sertir (2, 10) présente au moins un segment (3, 3', 12, 12') à paroi mince réalisé en forme de cuvette, dans lequel la bague (4, 4', 11, 11') peut être insérée, dont le diamètre intérieur après la formation de la fermeture par correspondance de forme est légèrement inférieur au diamètre extérieur de la zone de fond du segment (3, 3', 12, 12') en forme de cuvette, la zone en forme de cuvette formant, après l'insertion, une étanchéité métallique avec la zone d'enveloppe du tube de conduite (5, 5') située en dessous.

2. Assemblage de tubes par sertissage selon la revendication 1,
**caractérisé en ce que** le contour extérieur (18) de la bague (4, 4', 11, 11'), faisant saillie au-dessus du segment (3, 3', 12, 12') réalisé en forme de cuvette, correspond approximativement à l'évidement (19) de mâchoires de compression courantes (16, 16').

3. Assemblage de tubes par sertissage selon les revendications 1 et 2,
**caractérisé en ce que** la zone de fond du segment (3, 3') réalisé en forme de cuvette présente une élévation (8) qui en fait le tour.

4. Assemblage de tubes par sertissage selon la revendication 3,
**caractérisé en ce que** l'élévation (8) est agencée de manière symétrique dans le segment (3, 3').

5. Assemblage de tubes par sertissage selon l'une des revendications 1 à 4,
**caractérisé en ce que** les zones d'extrémité de la bague (3, 3', 11, 11') pouvant être insérée sont réalisées en tant que fermeture en forme de crochet (13, 14).

6. Assemblage de tubes par sertissage selon l'une des revendications 1 à 5,
**caractérisé en ce que** la bague (15) est pourvue, de chaque côté, dans la zone de fermeture, d'une butée (17, 17') s'étendant radialement vers l'extérieur.
